# EUROPÄISCHE PATENTANMELDUNG

(11) **EP 2 169 608 A1**
(43) Veröffentlichungstag der Anmeldung: **31.03.2010**
(21) Anmeldenummer: 08163751.4
(22) Anmeldetag: 05.09.2008
(51) Int. Cl.: G06Q 30/00, G07B 17/00, G06F 17/30

(54) **Verfahren- und Datenverarbeitungssystem für Transport-Dienstleister**

(71) Anmelder: Wincor Nixdorf International GmbH, 33106 Paderborn (DE)
(72) Erfinder: Jantsch, Dirk, 51147, Köln (DE); von Bremen, Hans-Joachim, 34431, Marsberg-Westheim (DE)
(74) Vertreter: 2K Patentanwälte Blasberg Kewitz & Reichel

(57) **Zusammenfassung**

Vorrichtung zur variablen Abbildung von Postdienstleistungen für Postprodukte umfassend:
- einen Prozessor, der Berechnungen durchführt und Formeln zur Laufzeit interpretiert
- mit einem Datenbanksystem, das
a)eine Tabelle für das Zielgebiet aufweist, in der die möglichen Zielgebiete für das Postprodukt abgelegt werden;
b) eine Tabelle für das Post-Produkt aufweist, in der die möglichen Arten des Postproduktes abgelegt sind;
c) eine Tabelle für die Zusatzleistung aufweist, in der die Art des Transports des Postprodukts abgelegt sind,
wobei diese jeweils miteinander verknüpft sind,
d) eine Tabelle mit Preisinformationen,
wobei die Tabellen a)-d) unmittelbar oder mittelbar durch weitere Tabelle miteinander verknüpft sind, wobei mindestens ein Datenbankfeld vorgesehen ist, in dem Formeln hinterlegt sind, die durch einen Anwender änderbar sind, und die zur Laufzeit durch den Prozessor zur Berechnung des Preises interpretiert werden;

- mit einer Netzwerkschnittstelle, um eine Kommunikation mit Clients über ein Netzwerk zu erlauben, wobei über die Schnittstelle Anfragen zu Preisfindungen für Postprodukte empfangen werden, und die es erlaubt, alle benötigten Informationen zur Preisfindung entgegenzunehmen oder nur Teile, um beim Fehlen von Informationen einen Dialog mit dem Client einzuleiten.

## Beschreibung

Die Erfindung betrifft ein Verfahren und eine Vorrichtung zur automatischen flexiblen Konfiguration und Abbildung der Produktstruktur von Post/Transportprodukten, die einen einfachen und flexiblen Einsatz bei unterschiedlichen Transportdienstleistern erlaubt.

### Überblick über die Erfindung:

Die elektronische flexible Definition und das Betreuen von Postprodukten ist ein wesentlicher Aspekt der Erfindung.

Viele Steuerungssysteme sind lediglich für einen Postdienstleister, z. B. UPS, TNT, Royal Mail, DPD etc. ausgelegt und für deren Bedürfnisse entwickelt worden. Ziel ist es, ein möglichst flexibles System bereitzustellen, das den Anforderungen aller Dienstleister gerecht wird und deren Produkte effizient abbildbar macht. Hierzu ist es notwendig, eine Systemarchitektur zu wählen, die es erlaubt, eine Vielzahl von Produkten in diesem System flexibel abzulegen, um deren Kalkulation durchzuführen.

### Überblick über die Erfindung:

Gelöst wird die Erfindung durch ein Verfahren und eine Vorrichtung mit den Merkmalen der unabhängigen Ansprüche.

Im Einzelnen handelt es sich um ein Serversystem, das eine SOA service oriente Architektur aufweist. Bei einer solchen Architektur werden definierte Schnittstellen bereitgestellt. Auch wenn es keine allgemein akzeptierte Definition von SOA gibt, so wird häufig die Definition von der OASIS aus dem Jahr 2006 zitiert:
"SOA ist ein Paradigma für die Strukturierung und Nutzung verteilter Funktionalität, die von unterschiedlichen Besitzern verantwortet wird."

Zentrales Thema aller Definitionen sind die Dienste. Im Folgenden werden die idealtypischen Eigenschaften von Diensten in einer SOA aufgeführt. In der Praxis werden nicht alle dieser Anforderungen vollständig eingehalten. Die Merkmale des Dienstes werden wie folgt definiert.
- Ein Dienst ist in sich abgeschlossen und kann eigenständig genutzt werden.
- Ein Dienst ist in einem Netzwerk verfügbar.
- Ein Dienst hat eine veröffentlichte Schnittstelle. Für die Nutzung reicht es, die Schnittstelle zu kennen. Kenntnisse über die Details der Implementierung sind hingegen nicht erforderlich.
- Ein Dienst ist plattformunabhängig, d.h. Anbieter und Nutzer eines Dienstes können in unterschiedlichen Programmiersprachen auf verschiedenen Plattformen realisiert sein.
- Ein Dienst ist in einem Verzeichnis registriert.
- Ein Dienst ist dynamisch gebunden, d.h. bei der Erstellung einer Anwendung, die einen Dienst nutzt, muss der Dienst nicht vorhanden sein. Er wird erst bei der Ausführung lokalisiert und eingebunden.

In der Regel werden die Services durch Kommandos in XML angesprochen. Alternative Formate sind natürlich denkbar.

Das Serversystem weist einen oder mehrere Prozessoren auf, durch die es Berechnungen durchführt, die eine Datenbank steuern und weitere Aufgaben übernehmen, die die Prozessoren vom Betriebssystem zugewiesen bekommen. Ferner werden zur Laufzeit Formeln interpretiert. Dies kann z.B. durch einen eingebetteten Formel- Interpreter erfolgen oder durch Verwendung von Code, der eine Ausführung als Datenbanktrigger erlaubt oder durch Verwendung von JAVA, C# oder anderen Interpretersprachen.

Ferner besteht Zugriff auf ein Datenbanksystem, das auf dem gleichen Serversystem verwaltet wird oder auf einem weiteren Serversystem.

Die Datenbank umfasst:
a) eine Tabelle für das Zielgebiet, in der die möglichen Zielgebiete für das Postprodukt abgelegt werden. Diese Tabelle ist vorzugsweise mit einer Reihe weiteren Tabellen verknüpft, die das Land und die Postleitzahlen verwalten. Hierdurch ist es möglich, die Zielregion für ein Produkt zu ermitteln. Die Zielregion steht in Relation zu den zusätzlichen Diensten, Produkten und den Gebühren.
b) Weiterhin umfasst die Datenbank eine Tabelle für das Post-Produkt, in der die möglichen Arten des Postproduktes abgelegt sind. So können z.B. Briefe oder Pakete in unterschiedlichen Größen als Postprodukte darin aufgeführt sein. Auch diese Tabelle ist vorzugsweise mit anderen Tabellen verknüpft.
c) Weiterhin umfasst die Datenbank eine Tabelle für die Zusatzleistung, in der die Art des Transports des Postprodukts abgelegt ist. Die Art des Transports kann z.B. die Höhe der Versicherung, die Geschwindigkeit des Transports, Nachnahmegebühren etc. sein.
d) Weiterhin umfasst die Datenbank eine Tabelle mit Preisinformationen, in der die Preise für Produkte in Relation zur Zusatzleistung abgelegt sind.

Alle Tabellen sind unmittelbar oder mittelbar durch weitere Tabellen miteinander verknüpft, um die Produkte des jeweiligen Post-Dienstleistungsanbeiters abzubilden.

Die Tabellenstruktur ist vorzugsweise statisch. Da einige Gebühren jedoch von Formeln abhängen, wie z.B. das Volumengewicht bei Luftfracht, ist mindestens ein Datenbankfeld vorgesehen, in dem Formeln hinterlegt sind, die durch einen Anwender änderbar sind, und die zur Laufzeit durch den Prozessor zur Berechnung des Preises interpretiert werden. Ein solches Feld ist z.B. in der Tabelle Units hinterlegt, auf die später eingegangen wird.

Da die Vorrichtung vorzugsweise als Dienst ausgebildet ist, bedarf es eines Kommunikationsprotokolls. Dieses ist vorzugsweise in XML ausgebildet. Der Nutzer des Dienstes hat die Möglichkeit, alle Informationen an den Dienst zu übermitteln, soweit er in dessen Kenntnis ist, oder auch nur Teile. Wenn er nur Teile übermittelt, wie z.B. Zielgebiet und Produkt und den Zusatzservice nicht angibt, so fragt die Netzwerkschnittstelle in der folgenden Zeit nach weiteren Parametern. Dies kann z.B. der Zusatzservice sein. Hierbei wird vorzugsweise ein Erklärungstext mit den jeweiligen Antwortparametern übermittelt. Vorstellbar ist eine Antwort in der Art

<MISSING_PARAMETER> <Addonservice><AddonserviceDescripion> Es fehlen Informationen zu möglichen Zusatzdiensten< /AddonServiceDescripion><AddonServiceClasses>Nachnahme, Expresszustellung,Versicherungshöhe,None></AddonServiceClasse s></AddonServiceDescripion></AddOnService>

Anhand dieser Art der Kommunikation kann nun der Client-Rechner, der mit dem Service in Verbindung tritt, erkennen, dass Informationen für die Zusatzdienstleistungen nicht gegeben sind. Nun kann anhand der Möglichen AddonServiceClasses entschieden werden, welche Zusatzdienstleistung in Anspruch genommen werden soll, bzw. ob überhaupt eine Dienstleistung in Anspruch genommen werden soll.

Die Tabelle Zusatzleistungen weist eine Untertabelle auf, die zusätzliche Zusatzleistungen definiert, die zusätzlich zu den bestehenden Zusatzleistungen auswählbar sind. Ebenfalls sind Tabellen erlaubt, die Ausnahmen von den Zusatzleistungen definieren.

Weitere Ausnahme- und Zulassungstabellen für das Zielgebiet stehen mit Produkt- oder Zusatzleistungstabellen in Verbindung, um auszudrücken, welche Art von Produkt an welches Zielgebiet mit welchem Dienst gesendet werden kann und welches nicht.

Ferner wird eine Einheit eines Produktes durch eine Untertabelle definiert. In der Tabelle "Unit" ist die benutzerdefinierbare Formel abgelegt, die vorzugsweise, die Maße und das Gewicht berücksichtigt. So kann in dieser Tabelle das Raumgewicht berechnet werden. Die Einheiten können in Abhängigkeit des Gesamtgewichts oder von Bereichen bestimmt werden. Ferner wird die Menge in der Tabelle Unit berücksichtig. Dabei kann Menge wiederum folgendes umfassen:
a) Anzahl, z.B. von Briefen, Paketen;
b) Zeit(menge)als Anzahl von Tage, Wochen oder Monaten in Verbindung mit postlagernden Sendungen oder Nachsendeaufträgen.
c) Wert(menge) in Verbindung mit dem Abschluss einer Versicherung bei Verlust oder Beschädigung der Postsendung.

Durch diesen Ansatz hat die vorliegende Erfindung eine Reihe von technischen Vorteilen. Durch die Einheitliche Datenstruktur für viele Post-Dienstleistungs-Anbieter und die Konfiguration des Systems lediglich über die Einträge der Datenbank kann ein Update für alle Anwender einfach entwickelte werden, ohne dass eine individuelle Programmierung berücksichtigt werden muss. Durch das Datenbankmodell sind Änderungen im Vergleich zu herkömmlichen, propietären Steuerungssystemen deutlichen schneller durchzuführen. So kann eine Effizienzsteigerung von mehr als 50% erreicht werden beim Programmieraufwand, Testaufwand, Logistikaufwand (Versenden von Programm Programm-Updates). Daraus ergeben sich ein erheblicher Kostenvorteil und auch eine Plattformunabhängigkeit. Grundsätzlich kann das Datenbanksystem auf einer Vielzahl von Betriebssystemen arbeiten, so dass proprietäre Lösung, die auf bestimmte Betriebssysteme zugeschnitten werden einfacher abgelöst werden können.

### Figurenbeschreibung:

Im Folgenden werden die Figuren kurz beschrieben:
- Fig. 1: zeigt ein Schichtenmodell der vorliegenden Erfindung;

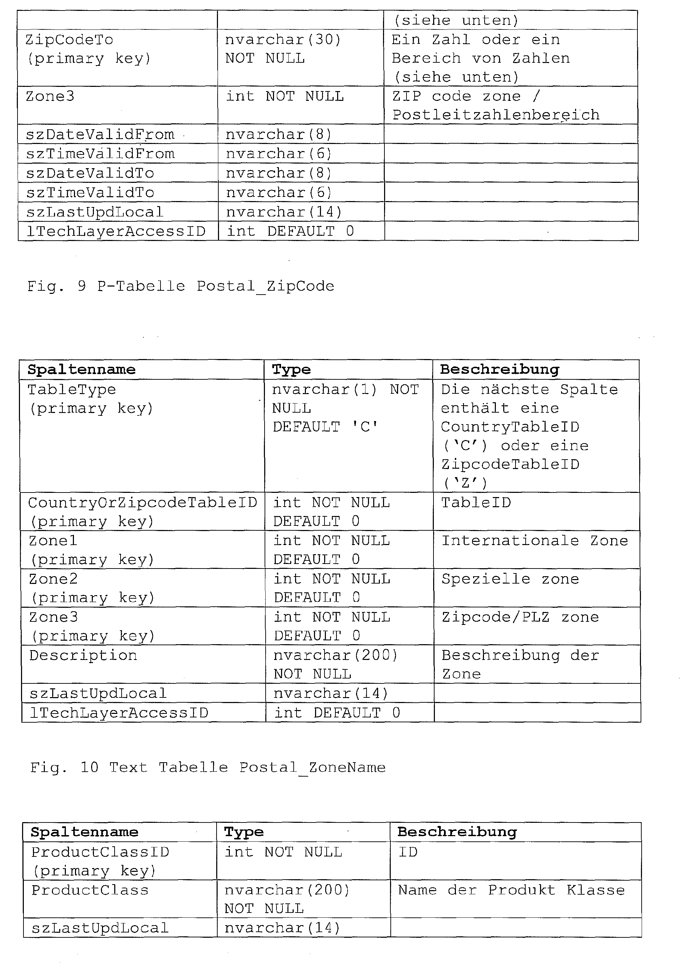

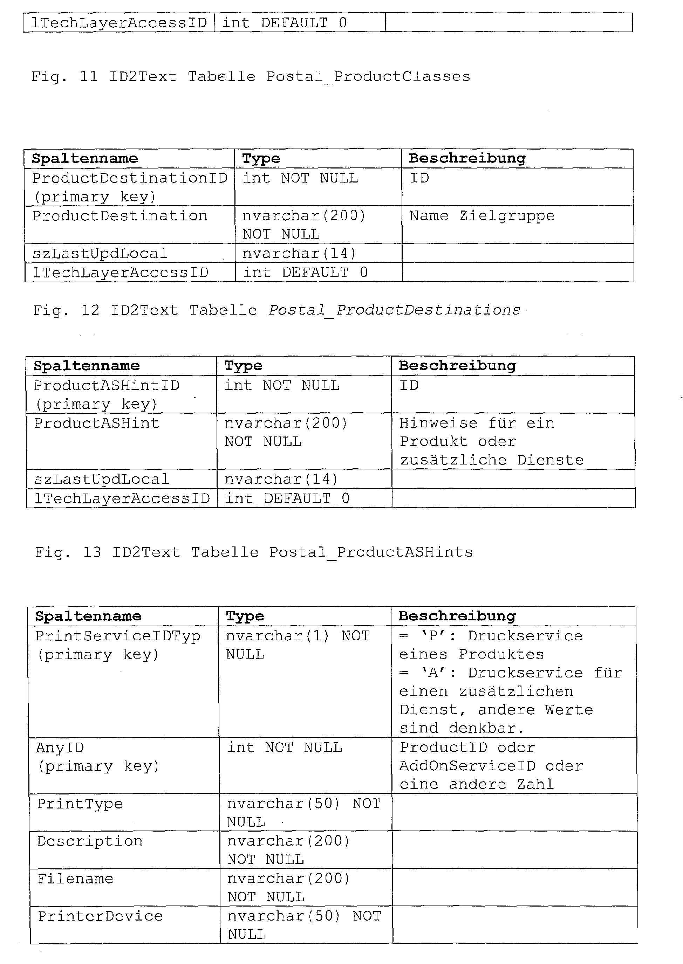

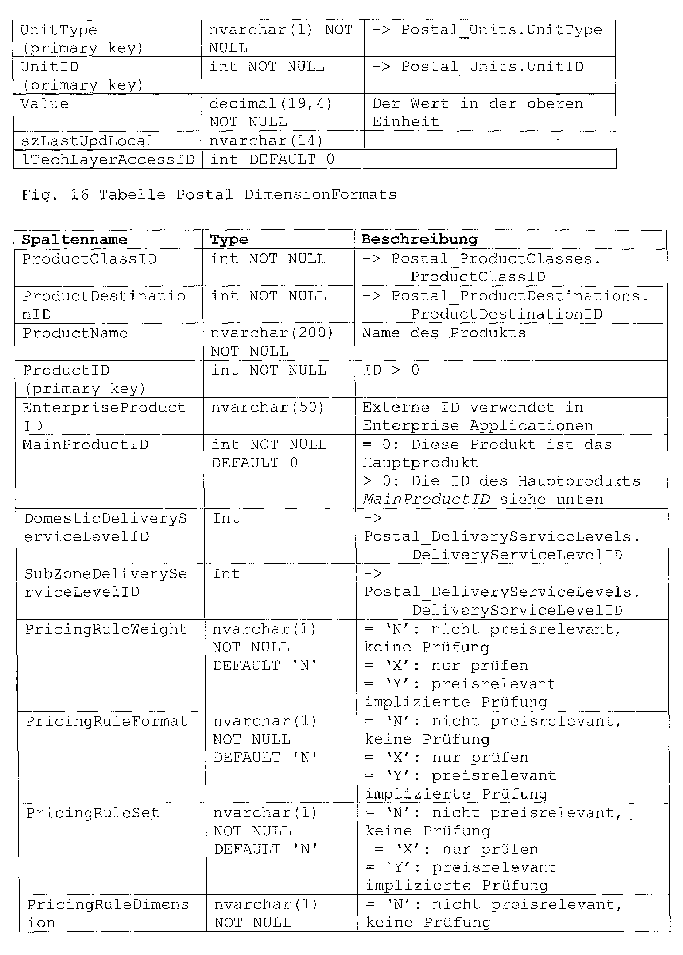

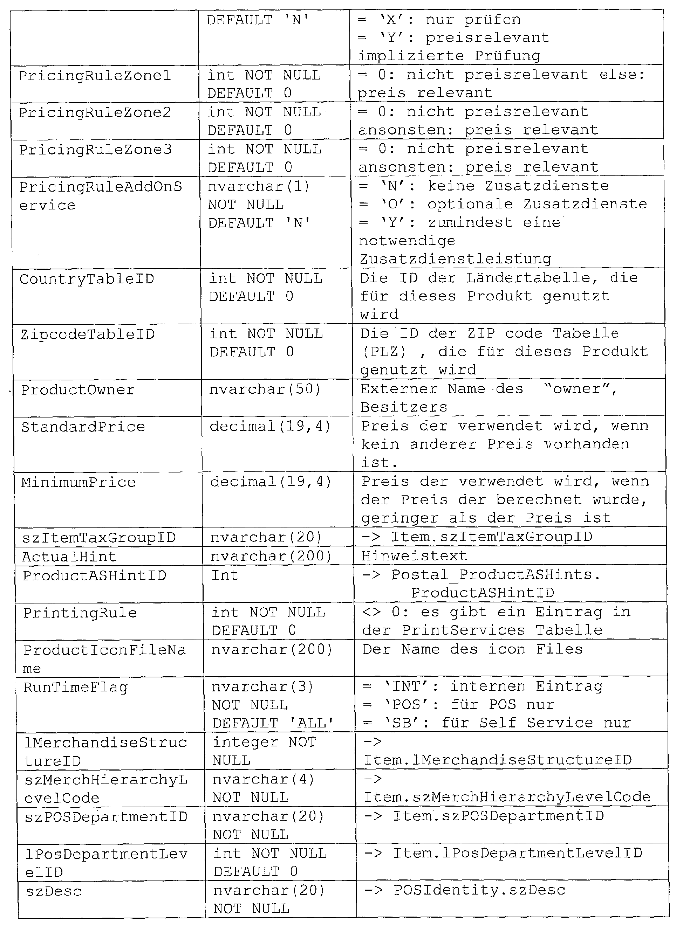

- Fig. 2 -18: zeigen den detaillierten Aufbau der Tabellen der Datenbank
- Fig. 18a-18b: zeigen eine Tabelle mit Bezug zu einem konkreten Beispiel
- Fig. 19-23: zeigen den detaillierten Aufbau der Tabellen der Datenbank

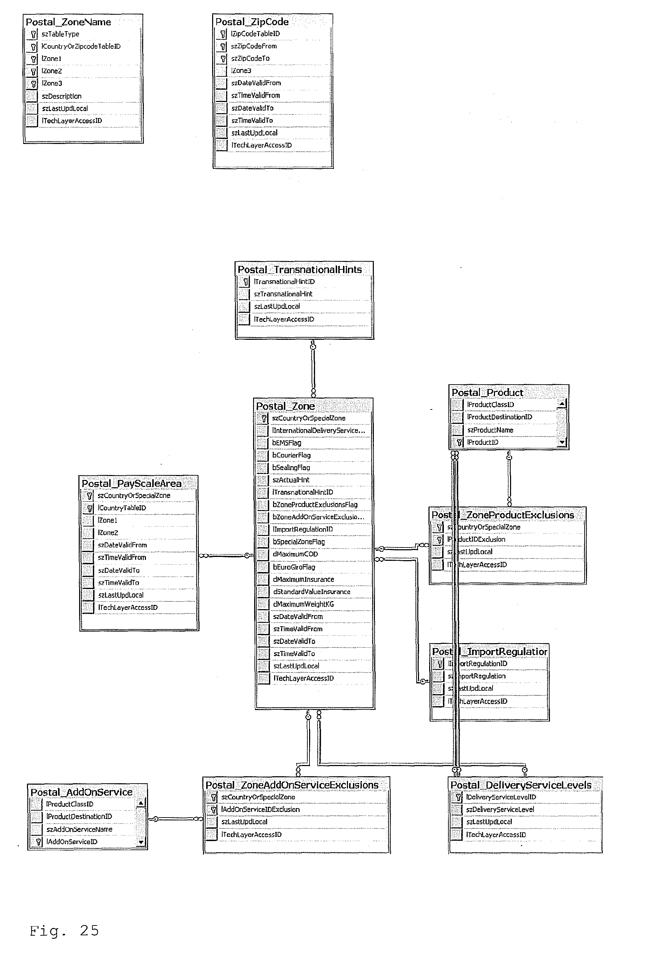

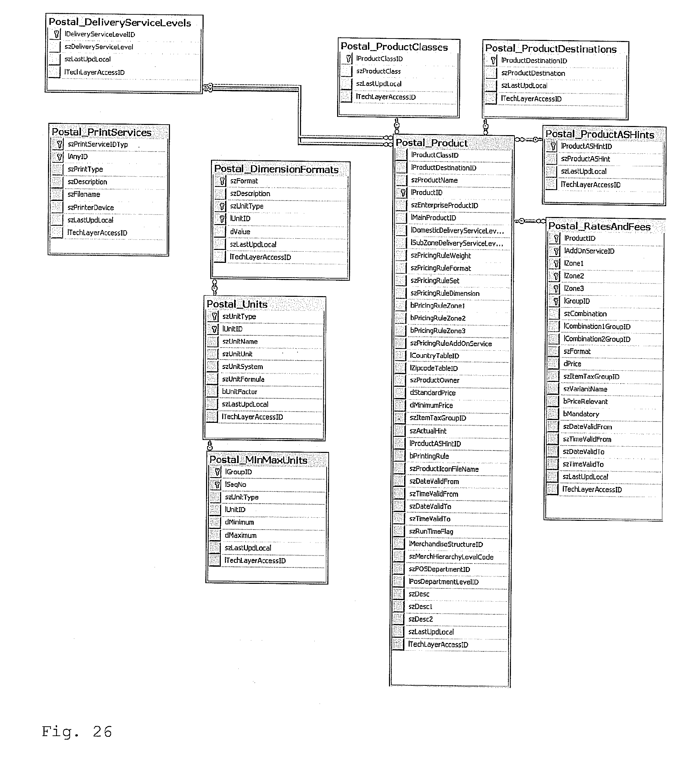

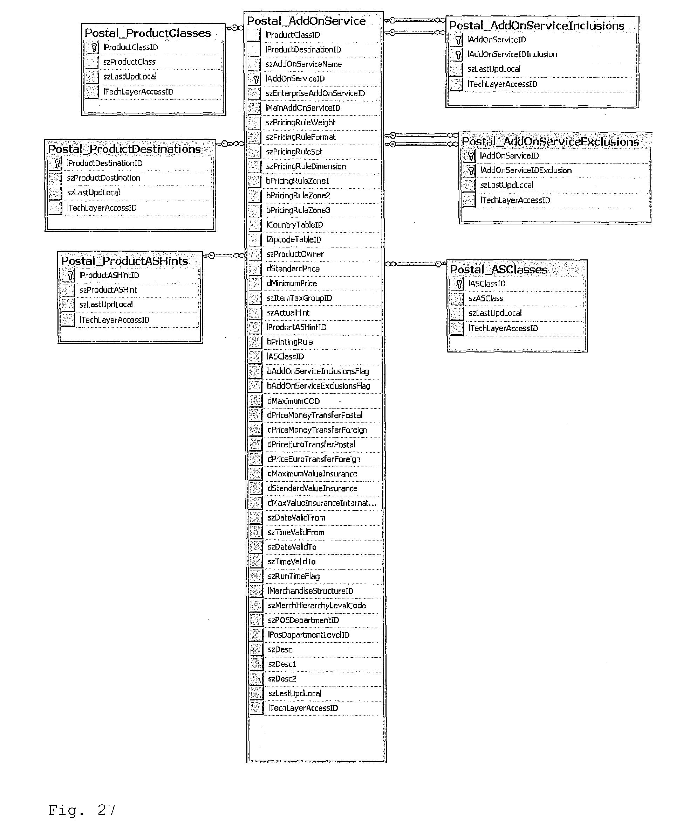

- Fig. 24-27: zeigen das Relationenmodell der Datenbank

### Detaillierte Beschreibung

Da die Haupt Entität Zone nahezu unabhängig von den anderen Haupt Entitäten ist, beginnt die Beschreibung mit der Tabellenzone. Danach wird das Produkt beschrieben, das abhängig von der Zone ist und als letztes der Zusatz-Service, beziehungsweise die Zusatzdienstleistung. Die Tabellen werden dabei wie in den Figuren beschrieben klassifiziert.
- Die Syntax der Tabellen ist wie folgt zu verstehen: Tabellen, die lediglich Abbildungen von einer ID auf einen Text sind, werden mit ID2Text gekennzeichnet.
- Tabellen, die im wesentlichen Text enthalten, werden mit Text markiert.
- Tabellen, die relevant sind für die Preisfindung, werden mit einem P- versehen.

Alle P-Tabellen enthalten Zeitinformationen, die die Gültigkeit des Eintrages bestimmen und die von der POSIdentity Tabelle bekannt sind.:
szDateValidFrom, szTimeValidFrom, szDateValidTo, szTimeValidTo

Die Tabellen der Figuren enthalten als Figurenbezeichnung den Tabellennamen, als Spalten jeweils den Spaltennamen, den Daten-Typ und die Beschreibung des Feldes.
A "-> table.column" zeigt den Verweis zu einer anderen Tabelle

Im allgemeinen sind die Namenskonventionen für Typen
- Boolean startet mit "b"
- Integer startet mit "1"
- Decimals startet mit "d"
- Strings startet mit "sz"

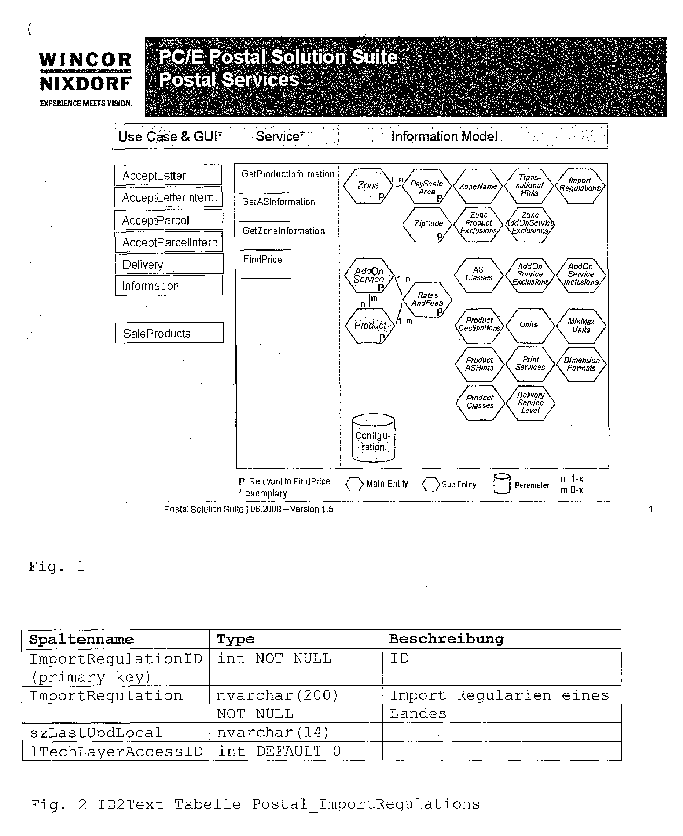

Im Einzelnen zeigt die Figur 1 die Struktur der Erfindung. Der Dienst ist ein Bereich, der auf ein Informations- Model zurückgreift. Das Informationsmodel ist als eine Datenbank ausgebildet. Benutzer und Clients verwenden den Dienst, beziehungsweise den Service, und senden ihm Produktinformationen, Gebietsinformationen und zusätzliche Dienstleistungsinformationen. Als Ergebnis wird dann der Preis durch das System bereitgestellt.

Die Datenbank ist eine der wesentlichen Komponenten der vorliegenden Erfindung. Die Tabellen bezüglich des Gebietes werden als "Zone" bezeichnet die Tabellen bezüglich des Produktes werden als "Product" bezeichnet und die zusätzlichen Dienste werden als "AddOnService" dargestellt. Weiterhin gibt es noch Konfigurationsparameter, die in einer entsprechenden Tabelle abgelegt werden. Die Haupttabellen, wie sie in den Ansprüchen beschrieben wurden, sind durch zusätzliche Untertabellen miteinander verbunden, beziehungsweise werden die Merkmale der Haupttabellen durch die Untertabellen detailliert definiert.

Aufgrund der Beschreibung der Tabelleneinträge in den Figuren erübrigt sich oftmals ein exaktes Eingehen auf die Figuren. So sind die Figuren 1 bis 4 selbsterklärend.

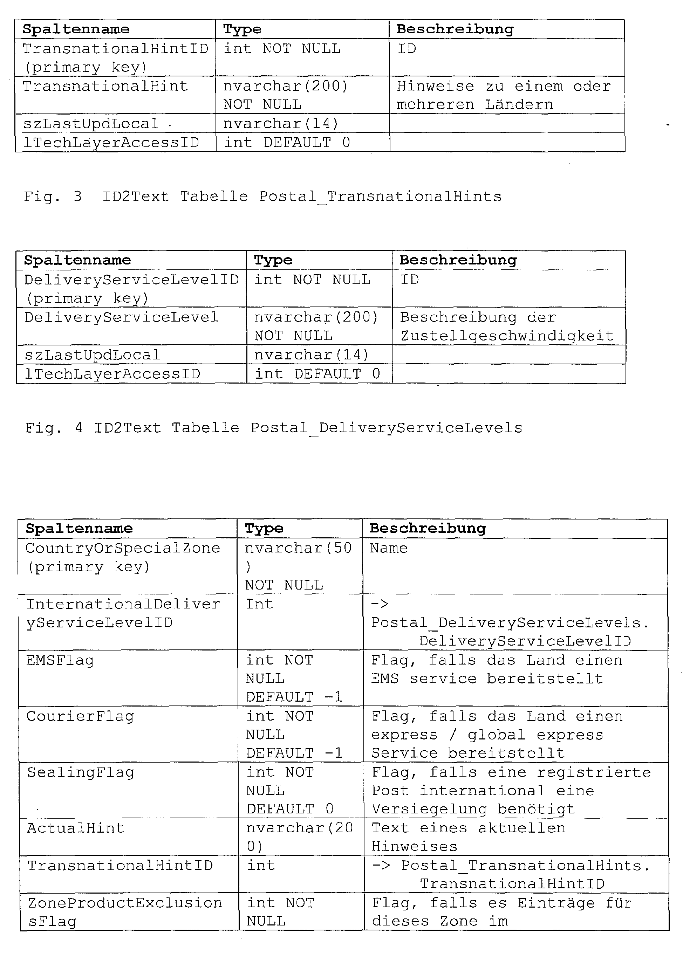

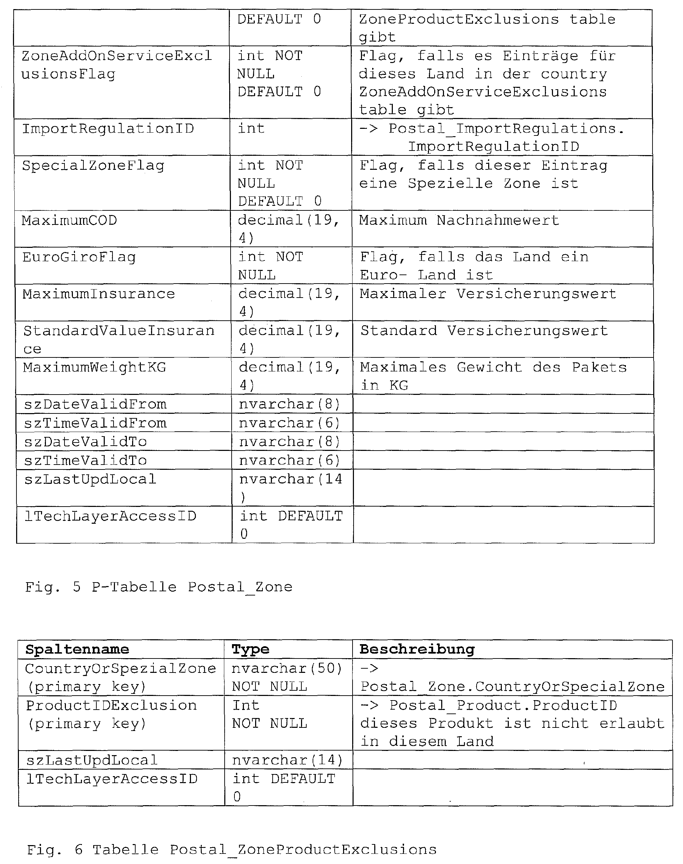

Die Figur 5 definiert eine der Haupttabellen (Zone), die das Zielgebiet definiert. Insoweit ist festzustellen, dass die Postprodukte oder zusätzlichen Dienstleistungen unterteilt sind in Länder und spezielle Zonen (Gebiete innerhalb von Ländern). D.h. dass sowohl Länder, als auch Zusatzdienstleistungen (Service) jeweils bestimmt werden können in Abhängigkeit des Gebietes bzw. der Zone. Alle Länder und spezielle Zonen sind durch diese Tabelle definiert.

Die Figur 6 listet die Produkte auf, die in einer bestimmten Zone nicht verwendet werden können. Tabelle 7 listet die Zusatzleistung auf, die in einer bestimmten Zone nicht erbracht werden können. Es handelt sich somit in beiden Fällen um Ausschlussinformationen für die entsprechenden Produkte.

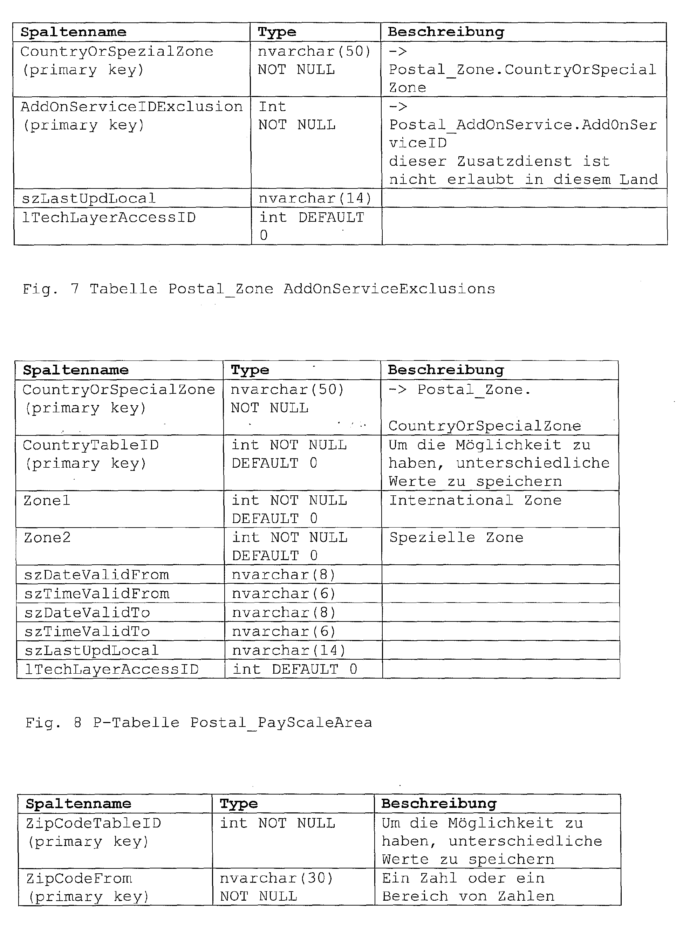

In der Fig 8 werden für die Tabelle Postal_PayScaleArea für "zone" drei unterschiedliche Integer-Werte gewählt:
- *Zone1* ist der "international" integer Wert
- *Zone2* ist der "special zone" integer Wert
- *Zone3* ist der "ZIP code" integer Wert

Jeder *CountryOrSpecialZone*, die in der *Postal_Zone* Tabelle definiert wurde, sollte einen Eintrag in der *CountryTableID* haben.

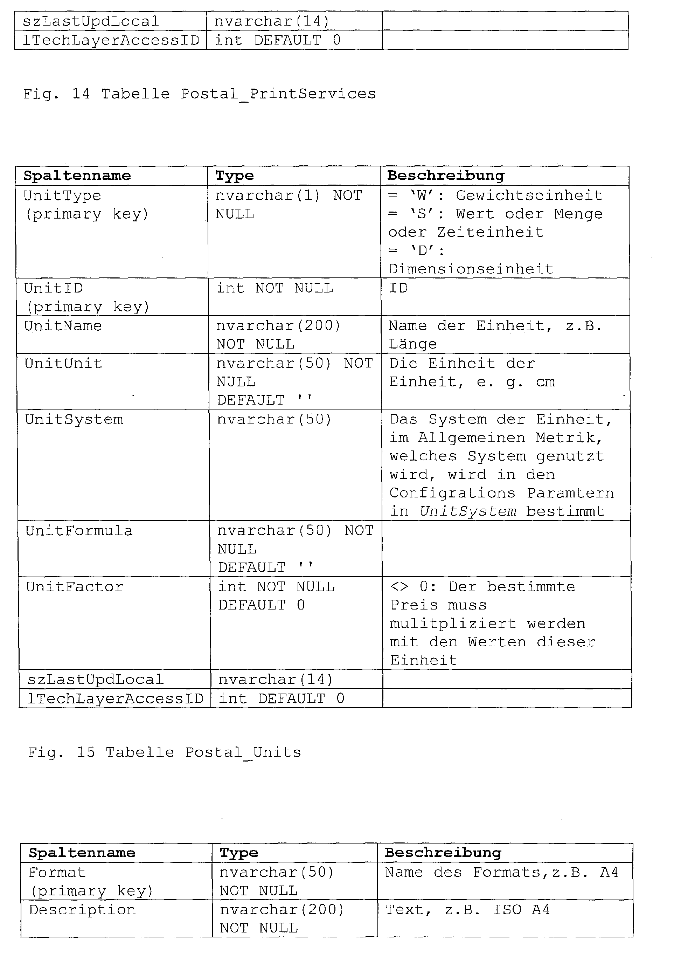

Die Tabelle in Fig. 15 definiert die Maßeinheiten, die im Datenmodell verwendet wurden. Insbesondere das Feld *UnitFormula* erlaubt es, dem Benutzer bzw. Betreiber des Dienstes eine Berechnungsformel zu hinterlegen, die eine Einheit bestimmt. Die Berechnungsformel verwendet in der Regel Werte, die vorher eingegeben wurden. Ein vorhereingegeber Wert wird in der Formel definiert durch UnitType und UnitID. Diese Formel wird zur Laufzeit interpretiert.

Als Beispiel könnte man anführen:
Der Kunde gibt die folgenden Werte ein:
   'D' Einheit 10 "Länge" in "cm"
   'D' Einheit 3 "Durchmesser" in "cm"
   'W' Einheit 2 "Gewicht" in "kg"

Dann berechnet die Formel

D10 > 120 or D3 > 15 or W2 > 5

Wobei der Wert 0 oder 1 sein kann. Es ist zu beachten, dass sowohl logische als auch arithmetische Operationen bei den Formeln erlaubt sind.

Die folgenden Formelmuster sind erlaubt - U1, U2, ... Un sind Einheiten Typen pus IDs und V1, V2, ..., Vn sind Werte:
- "Normal" Ausdrücke, bei denen die Folgenden Operatoren verwendet werden + - * / ( ) Beispiel: ((W1-20)*0.00352+0.28)*S4
- CEILING(U1)
   Regel: Teile der Formel zwischen '(' und ')' müssen eine Einheit sein Plus ID. Das Ergebnis ist der kleinste Integer größer oder gleich dem Wert. Es wird somit eine Aufrundung nach oben vorgenommen.
- FLOOR(U1)
   Regel: ist das Gegenteil zu CEILING(U1).
- MAX (U1, U2,..., Un)
   Regel: bestimmt den Maximalen Wert.
- U1 > V1 or U2 > V2 or ... or Un > Vn
   Regel: zeigt eine Oderverknüpfung mit arithmetischem Vergleich.

In Fig. 15 wird die Tabelle Postal_Product beschrieben. Diese Tabelle ist die Basis für alle Produktdefinitionen. Die Produkte werden in zweierlei Weisen gruppiert, zuerst in die Produktklassen (Briefe Pakete usw.) und zweitens in die Produkt Ziele (nationale oder internationale usw.). Jedes Produkt weist eine *ProduktID* auf. Weitere Tabellen, die spezifische Definitionen für ein Produkt enthalten, weisen ebenfalls eine *ProduktID* auf, so dass eine Verknüpfung möglich ist.
Weiterhin kann ein Produkt eine Variation eines Hauptprodukts sein. Dann ist der Wert *MainProduktcID >0.* Ein Produkt kann in diesem Datenmodell nicht eine Variante einer Variante sein. In anderen Datenmodellen mag dies möglich sein.

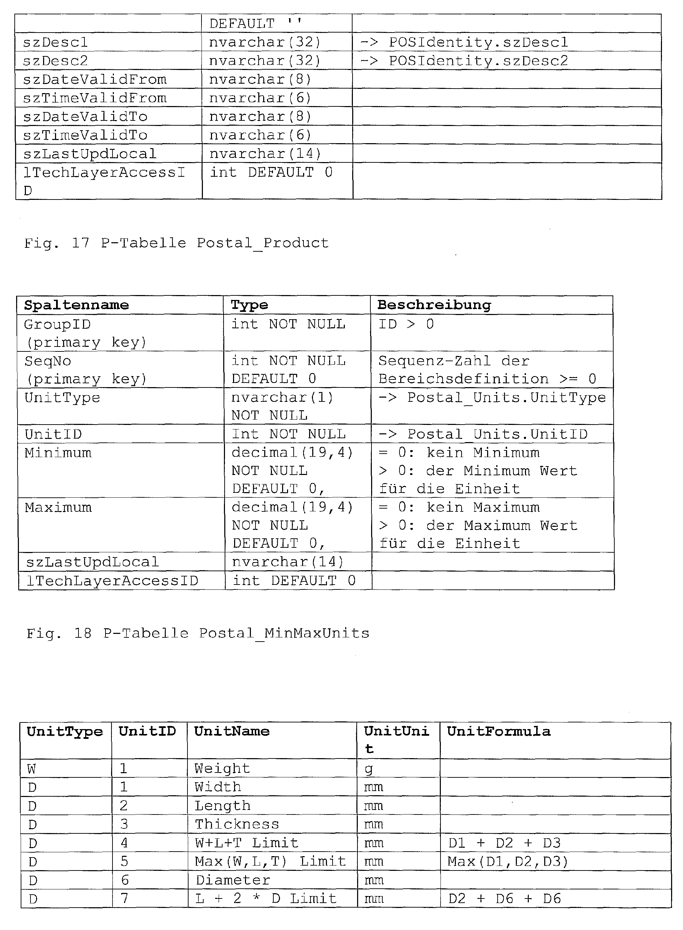

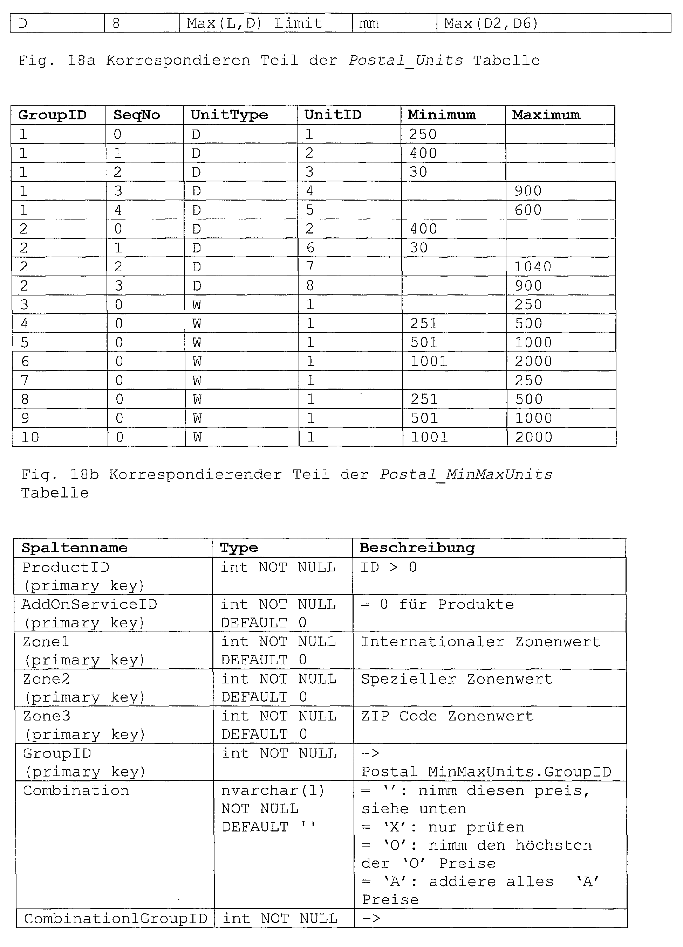

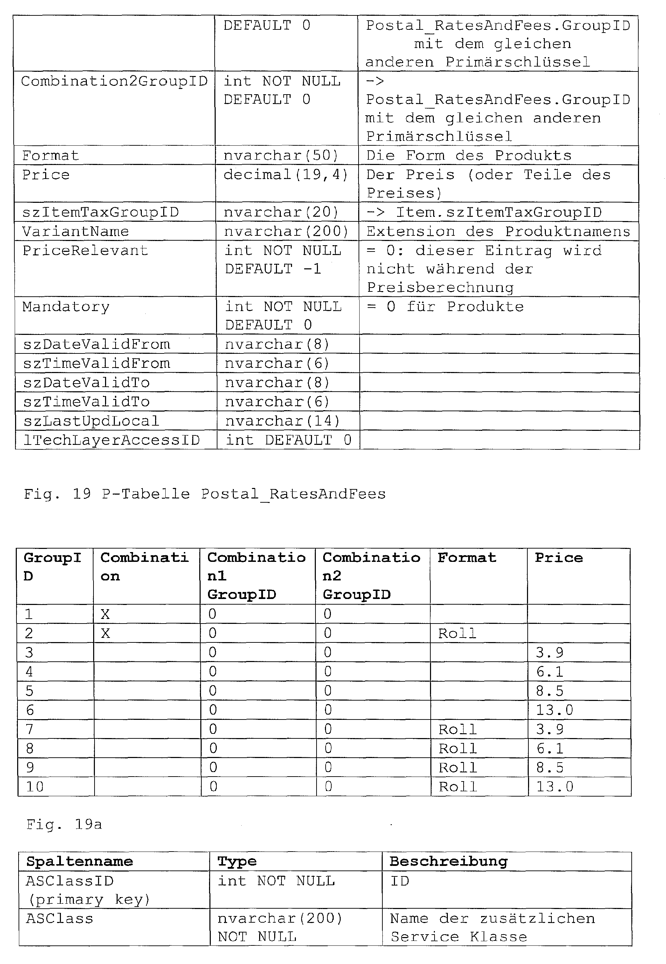

Die Figur 18 zeigt eine Definitione von Bereichen. Eine Bereichsdefinition wird für einen Minimum- und einen Maximumswert plus der entsprechenden Einheit getroffen. Falls die Einheit Gewicht in Kilo ist, so ist z.B. Min/Max von 10 bis 20. Die Bereichsdefinitionen werden wiederum gruppiert. Normalerweise gibt es für Gewichte nur eine Bereichsdefinition in einer Gruppe, jedoch können für Dimensionen Bereichsdefinitionen vorgegebenen sein die für Länge, Höhe und Tiefe stehen. Eine Gruppe wird mit einer eindeutigen GroupID gekennzeichnet, die in der Tabelle Postal_RatesAndFees definiert wird.
Die Tabellen 18-18b zeigen hier mögliche Ausführungsbeispiele von Tabellen mit Einträgen.
Die Tabellen Postal_RatesAndFees ist eine weitere wichtige Tabellen, die in Fig. 19a und b an auch als ein Ausführungsbeispiel gezeigt wird. Diese Tabelle ist nun mit Wert geführt. Diese Tabelle referenziert die Bereichsdefinition in Postal_MinMaxUnits und enthält Preise für ein Produkt und die drei Insiderwerte für die Zonen.

Es handelt sich hierbei um die gleiche Tabelle wie für Postal_RatesAndFees für AndOnService Definitionen.

Bezüglich der Figur 19a sind einige Aspekte zu beachten. Falls die *Combination* Spalte X ist, dann müssen die eingegebenen und berechneten Werte der Einheiten in den Bereich passen, der durch die *GroupID* festgelegt ist. Falls der Wert leer ist, definiert der passende "matching" Bereich den Preis. Somit sieht die Fortsetzung für das Beispiel der Postal_MinMaxUnit-Tabelle wie in Fig. 19a aus.

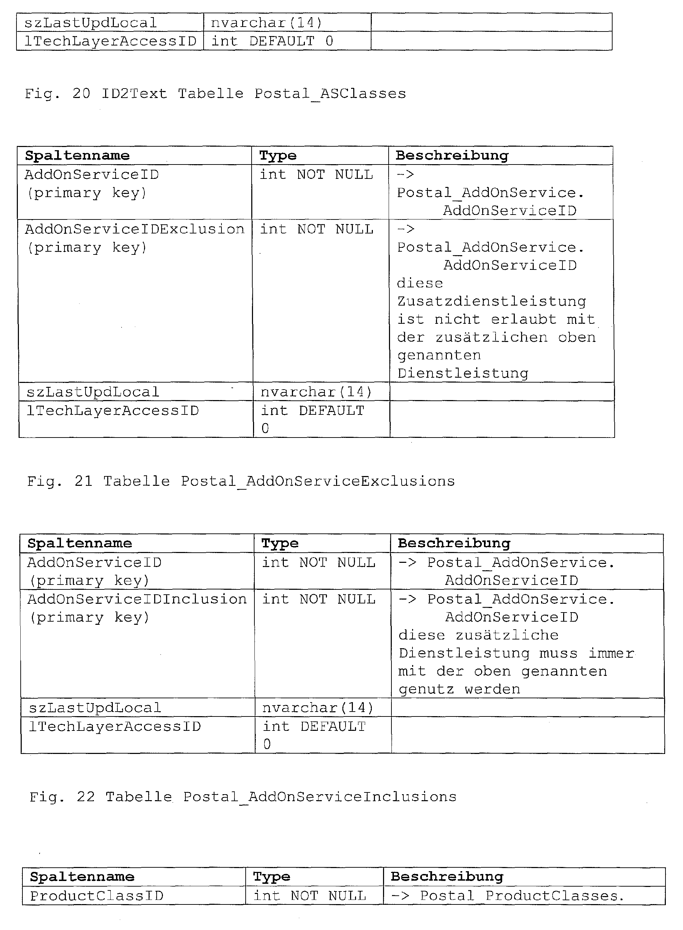

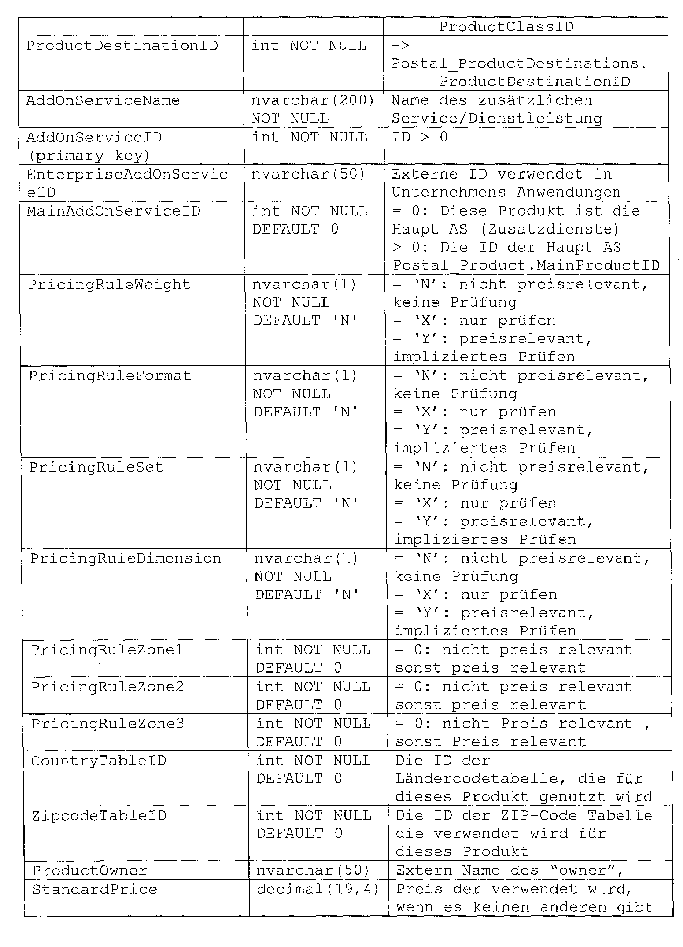

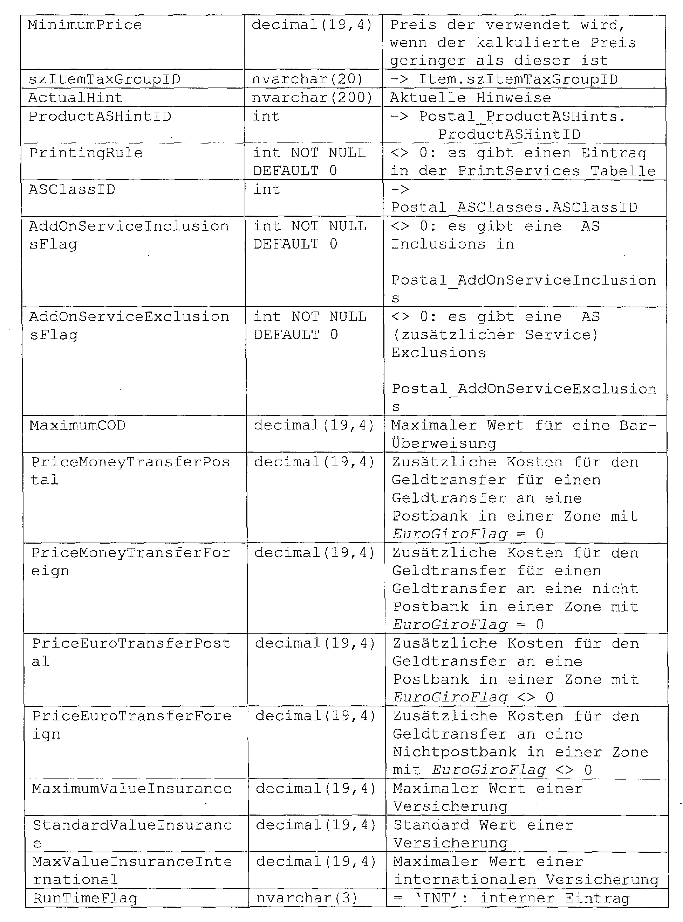

Die Fig. 23 zeigt eine Tabelle mit den Postal_AddOnServices. So können Zusatzleistungen zu einem oder mehreren Produkten gehören. Daraus ergibt sich, dass die Zusatzdienste gruppiert werden in der gleichen Weise, wie dies die Produkte können, zuzüglich zusätzlicher Dienstklassen. Die Verbindung zwischen Produkten und zusätzlichen Diensten erfolgt in der *Postal_ASRatesAndFees* Tabelle.

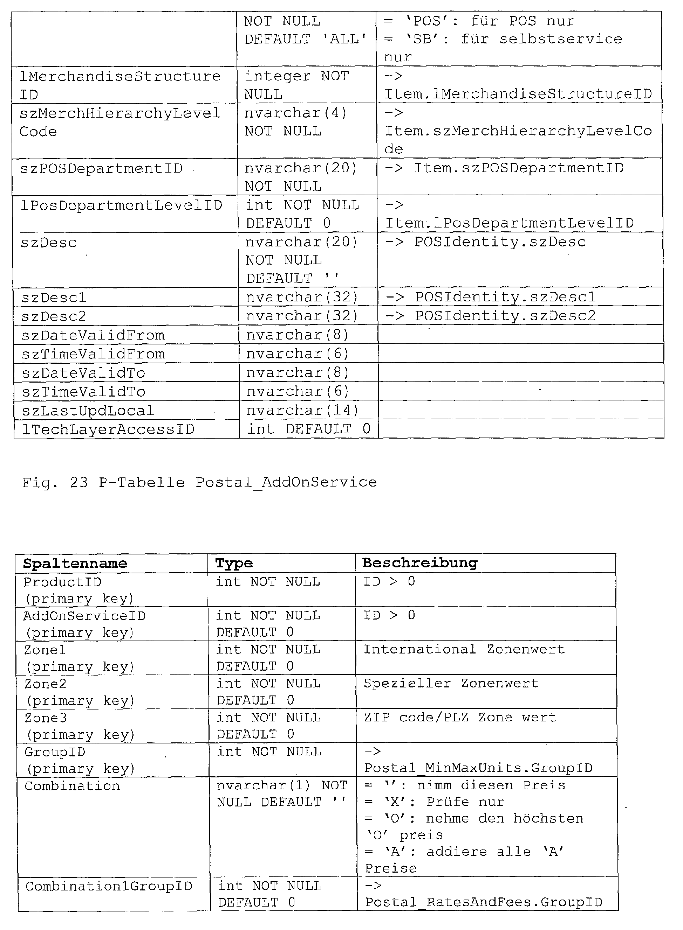

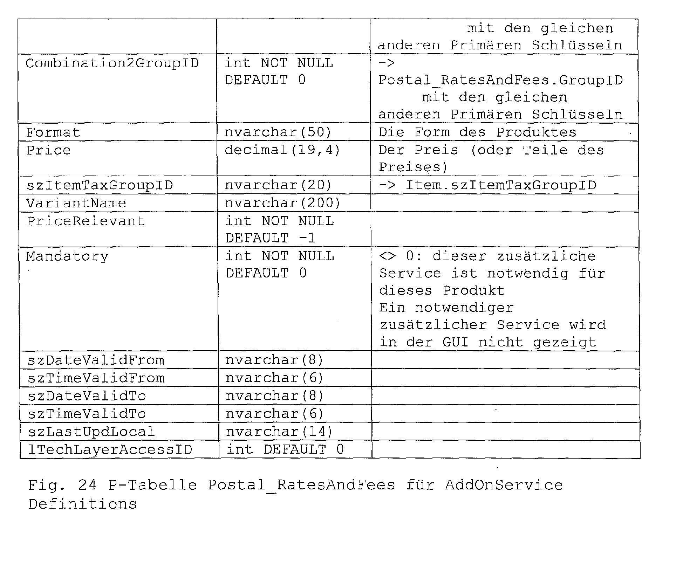

Die Tabelle in Figur 24 verbindet die Produkte mit zusätzlichen Diensten. Sie enthält Bereichsdefinitionen und Preise für jede Kombination und drei Integer-Werte für die Zonen.
Diese Tabelle referenziert die Bereichsdefinition in *Postal_MinMaxUnits.* Dies ist die gleiche Tabelle wie die *Postal_RatesAndFees* für Produktdefinitionen. Es gibt zwei Spalten, die lediglich für Produkte verwendet werden: VariantName und PriceRelevant. Für AddOnServices werden diese Werte nicht verwendet.

## Patentansprüche

1. Vorrichtung zur variablen Abbildung von Postdienstleistungen für Postprodukte umfassend:
- einen Prozessor, der Berechnungen durchführt und Formeln zur Laufzeit interpretiert
- mit einem Datenbanksystem, das
a)eine Tabelle für das Zielgebiet aufweist, in der die möglichen Zielgebiete für das Postprodukt abgelegt werden;
b) eine Tabelle für das Post-Produkt aufweist, in der die möglichen Arten des Postproduktes abgelegt sind;
c) eine Tabelle für die Zusatzleistung aufweist, in der die Art des Transports des Postprodukts abgelegt sind,
wobei diese jeweils miteinander verknüpft sind,
d) eine Tabelle mit Preisinformationen, wobei die Tabellen a)-d) unmittelbar oder mittelbar durch weitere Tabellen miteinander verknüpft sind,
wobei
mindestens ein Datenbankfeld vorgesehen ist, in dem Formeln hinterlegt sind, die durch einen Anwender änderbar sind, und die zur Laufzeit durch den Prozessor zur Berechnung des Preises interpretiert werden;
- mit einer Netzwerkschnittstelle, um eine Kommunikation mit Clients über ein Netzwerk zu erlauben, wobei über die Schnittstelle Anfragen zu Preisfindungen für Postprodukte empfangen werden, und die es erlaubt, alle benötigten Informationen zur Preisfindung entgegenzunehmen oder nur Teile, um beim Fehlen von Informationen einen Dialog mit dem Client einzuleiten.

2. Die Vorrichtung nach Anspruch 1, **gekennzeichnet durch** eine Serviceorientierte Architektur (SOA).

3. Die Vorrichtung nach einem oder mehreren der vorhergehenden Ansprüche, wobei die Datenbank eine Untertabelle aufweist, die zusätzliche Zusatzleistungen definiert, die zusätzlich zu den bestehenden Zusatzleistungen auswählbar sind.

4. Die Vorrichtung nach einem oder mehreren der vorhergehenden Ansprüche, wobei es für die Tabelle Gebiet eine Untertabelle gibt, die Gebietsausnahmen definiert und/oder es für die Zusatzleistungen eine Untertabelle gibt, die Ausnahmen von den Zusatzleistungen definiert, und/oder wobei es eine Untertabelle gibt, die für die Produkte minimale und maximale Einheiten definiert.

5. Die Vorrichtung nach einem oder mehreren der vorhergehenden Ansprüche, wobei eine Einheit eines Produktes durch eine Untertabelle definiert ist, in der Tabelle sind die benutzerdefinierbaren Formeln abgelegt, die vorzugsweise, die Maße, das Gewicht und/oder Mengen berücksichtigen.

6. Verfahren zur variablen Abbildung von Postdienstleistungen für Postprodukte mit einem Rechnersystem, der einen Prozessor zur Interpretation von Formeln zur Laufzeit aufweist,
mit einem Datenbanksystem, das
a)eine Tabelle für das Zielgebiet aufweist, in der die möglichen Zielgebiete für das Postprodukt abgelegt werden;
b) eine Tabelle für das Post-Produkt aufweist, in der die möglichen Arten des Postproduktes abgelegt sind;
c) eine Tabelle für die Zusatzleistung aufweist, in der die Art des Transports des Postprodukts abgelegt sind, wobei diese jeweils miteinander verknüpft sind,
d) eine Tabelle mit Preisinformationen,
wobei die Tabellen a)-d) unmittelbar oder mittelbar
durch weitere Tabellen miteinander verknüpft sind, wobei
mindestens ein Datenbankfeld vorgesehen ist, in dem Formeln hinterlegt sind, die durch einen Anwender änderbar sind, und die zur Laufzeit durch den Prozessor zur Berechnung des Preises interpretiert werden;
- mit einer Netzwerkschnittstelle, um eine Kommunikation mit Clients über ein Netzwerk zu erlauben,
umfassend die Schritte:
- Anfragen zu Preisfindungen für Postprodukte über die Netzwerkschnittstelle, wobei die benötigten Informationen zur Preisfindung beim Fehlen von Informationen in einem Dialog mit dem Client ermittelt werden, wobei die fehlenden Informationen aus dem Inhalt der Datenbank ermittelt werden,
- Berechnung des Preises durch Interpretation der Formel, die in der Datenbank abgelegt wurde.

7. Das Verfahren nach dem vorhergehenden Anspruch, **gekennzeichnet durch** eine Serviceorientierte Architektur (SOA).

8. Das Verfahren nach einem oder mehreren der vorhergehenden Verfahrensansprüche, wobei die Datenbank eine Untertabelle aufweist, die zusätzliche Zusatzleistungen definiert, die zusätzlich zu den bestehenden Zusatzleistungen ausgewertet werden.

9. Das Verfahren nach einem oder mehreren der vorhergehenden Verfahrensansprüche, wobei es für die Tabelle Gebiet eine Untertabelle gibt, die Gebietsausnahmen definiert und/oder für die Zusatzleistungen eine Untertabelle gibt, die Ausnahmen von den Zusatzleistungen definiert, und/oder wobei es eine Untertabelle gibt, die für die Produkte minimale und maximale Einheiten definiert, die bei der Abfrage ausgewertet werden.

10. Das Verfahren nach einem oder mehreren der vorhergehenden Verfahrensansprüche, wobei eine Einheit eines Produktes durch eine Untertabelle definiert ist, in der Tabelle ist die benutzerdefinierbare Formel abgelegt, die vorzugsweise, die Maße, das Gewicht und/oder Mengen berücksichtigt, und die während der Laufzeit Interpretiert wird.
